# EUROPEAN PATENT APPLICATION

(11) **EP 1 329 970 A2**
(43) Date of publication of application: **23.07.2003**
(21) Application number: 03250373.2
(22) Date of filing: 21.01.2003
(51) Int. Cl.: H01M 8/02, H01M 8/10

(54) **Fuel cell separator production method, fuel cell separators, and polymer electrolyte fuel cells**

(30) Priority: 21.01.2002 JP 2002011517
(71) Applicant: Nisshinbo Industries, Inc., Chuo-ku, Tokyo (JP)
(72) Inventor: Kotani, Saori c/o Nisshinbo Industries, Inc.,, Chiba-shi, Chiba-ken (JP); Horiuchi, Ayumi c/o Nisshinbo Industries, Inc.,, Chiba-shi, Chiba-ken (JP)
(74) Representative: Stuart, Ian Alexander

(57) **Abstract**

Fuel cell separators which are highly hydrophilic and undergo little leaching of substances that inhibit power generation can be produced by shaping a composition made primarily of an electrically conductive powder and a binder to form a shaped body, coating and impregnating the shaped body with a metal oxide-containing hydrophilic resin, then curing the hydrophilic resin.

## Description

### BACKGROUND OF THE INVENTION

### Field of the Invention

The present invention relates to a method of making fuel cell separators having hydrophilic properties. The invention also relates to fuel cell separators obtained by such a method, and to solid polymer electrolyte fuel cells in which such separators are used.

### Prior Art

Fuel cells are devices which, when supplied with a fuel such as hydrogen and atmospheric oxygen, cause the fuel and oxygen to react electrochemically, producing water and directly generating electricity. Because fuel cells are capable of achieving a high fuel-to-energy conversion efficiency and are environmentally friendly, they are being developed for a variety of applications, including small-scale local power generation, household power generation, simple power sources for isolated facilities such as campgrounds, mobile power sources such as for automobiles and small boats, and power sources for satellites and space development.

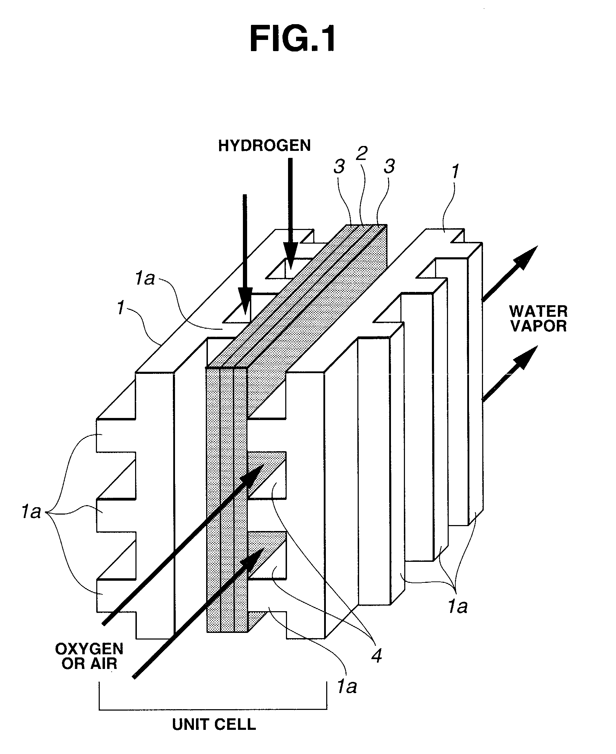

As shown in FIG. 1, such fuel cells, and particularly solid polymer fuel cells, are built in the form of modules composed of a stack of at least several tens of unit cells. Each unit cell has a pair of plate-like separators 1, 1 with a plurality of ribs 1a on either side thereof that define channels for the flow of gases such as hydrogen and oxygen. Disposed between the pair of separators 1, 1 in the unit cell are a solid polymer electrolyte membrane 2 and gas diffusing electrodes 3 made of carbon paper.

The role of the fuel cell separator 1 is to confer each unit cell with electrical conductivity, to provide channels for the supply of fuel and air (oxygen) to the unit cells, and to serve as a separating or boundary membrane between adjacent unit cells. Qualities required of the separator 1 include high electrical conductivity, high gas impermeability, electrochemical stability and hydrophilic properties.

The separator is required in particular to be capable of rapidly removing the water which is produced by the reaction of the gases and which has a large influence on the fuel cell characteristics. Hence, of the above-mentioned qualities of the separator 1, it is especially important to improve the hydrophilic properties.

Fuel cell separator materials used in the prior art include liquid resin-impregnated bodies obtained by forming a shaped laminate of a graphite block that has been treated to make it gas-impermeable, a corrosion-resistant metal and an expanded graphite sheet, impregnating the laminate with a liquid resin, then curing the resin. Yet, separators made of such a material have poor hydrophilic properties.

A number of ways have been devised to enhance the hydrophilic properties of the separator. These include:
(1) methods wherein a metal oxide (e.g., alumina, silica, zeolite) and a hydrophilic substance such as a hydrophilic resin (e.g., polyvinyl alcohol, polyethylene glycol, acrylic resin) are incorporated beforehand into the base material (see JP-A 10-3931, etc.);
(2) methods that involve coating a shaped substrate with the above-mentioned metal oxide or hydrophilic resin to form a hydrophilic coat (see JP-A 2000-251903, JP-A 2000-223131, JP-A 2001-93529, etc.); and
(3) methods in which a shaped substrate is subjected to surface treatment such as oxidation, acid treatment, plasma treatment, UV treatment, treatment with a surfactant, or treatment with a silane coupling agent.

However, in separators obtained by above method (1), metal ions and organic substances which inhibit the generation of electrical power by the fuel cell, sometimes referred to collectively herein as "electrical power generation inhibitors," leach out from the metal oxide and hydrophilic resin present in the base material. Moreover, to increase the amount of the hydrophilic substance present in the surface layer, the separator must be given a higher content of this substance. Yet, doing so diminishes the physical properties of the separator proper.

Separators obtained by above method (2) have good initial properties, but are subject to hydrolysis and have a poor resistance to hot water. Hence, during long-term fuel cell operation, metal ions and organic substances leach from the separator and have an adverse effect on the electrolyte membrane and the catalyst. Also, to avoid a rise in the contact resistance, it is necessary to treat only the channel portions of the separator. This increases the complexity of the production steps and leads to higher costs.

Finally, in the separators obtained by above method (3), surface treatment sometimes leads to a loss of strength and fails to provide long-lasting hydrophilic properties.

A preferred embodiment of one aspect of the present invention may provide a method of producing fuel cell separators that is capable of giving separators which have a high hydrophilicity and from which the leaching of substances that inhibit electrical power generation by the fuel cell does not readily occur. An embodiment of another aspect may provide fuel cell separators which are obtained by such a method. A further aspect of the invention is to provide solid polymer fuel cells in which such separators are used.

We have discovered that separators obtained by shaping a composition primarily comprising an electrically conductive powder and a binder to form a shaped body, coating and impregnating the shaped body with a metal oxide-containing hydrophilic resin, then curing the resin may have outstanding hydrophobic properties and may assist in minimising the amount of electrical power generation inhibitors that leach out from the separator during fuel cell operation.

Accordingly, in a first aspect, the invention provides a method of producing fuel cell separators, which method includes the steps of shaping a composition primarily comprising an electrically conductive powder and a binder to form a shaped body, coating and impregnating the shaped body with a metal oxide-containing hydrophilic resin, then curing the hydrophilic resin.

The metal oxide used in the method of the invention is preferably selected from among activated alumina, titanium oxide and tin oxide. The hydrophilic resin is preferably a hydrophilic epoxy resin, more preferably polyethylene glycol diglycidyl ether, and even more preferably polyethylene glycol diglycidyl ether having an epoxy equivalent of at least 300.

In a second aspect, the invention provides a fuel cell separator obtained by the fuel cell separator production method of the above-described first aspect of the invention.

In a third aspect, the invention provides a solid polymer electrolyte fuel cell having a plurality of stacked unit cells, each unit cell being composed of a solid polymer membrane, a pair of electrodes disposed on either side of the polymer membrane, and a pair of separators disposed on either side of the pair of electrodes such as to form gas supplying and removing channels. Some or all of the separators within the fuel cell are fuel cell separators according to the above-described second aspect of the invention.

### BRIEF DESCRIPTION OF THE DRAWINGS

FIG. 1 is a perspective view showing the unit cell construction in a typical fuel cell.
FIG. 2 shows a perspective view of a fuel cell separator according to one embodiment of the invention.

### DETAILED DESCRIPTION OF THE INVENTION

As noted above, the inventive method of producing fuel cell separators includes the steps of shaping a composition primarily comprising an electrically conductive powder and a binder into a shaped body, coating and impregnating the shaped body with a metal oxide-containing hydrophilic resin, then curing the hydrophilic resin.

The electrically conductive powder used herein may be any conductive powder commonly used in fuel cell separators. Illustrative examples include natural graphite, synthetic graphite, expanded graphite, carbon black, Ketjen black, acetylene black, amorphous carbon, metal fibers, activated alumina, titanium oxide, tin oxide and ruthenium oxide. The conductive powder has an average particle size which is not subject to any particular limitation, but is preferably from 0.1 to 300 µm. When the conductive powder is activated alumina, an average particle size of 10 to 100 µm is especially preferred. When the conductive powder is titanium oxide, tin oxide or ruthenium oxide, an average particle size of 0.1 to 10 µm is especially preferred.

The binder may be suitably selected from such binders as thermosetting resins and thermoplastic resins commonly used in fuel cell separators. Specific examples of binders that may be used include phenolic resins, epoxy resins, acrylic resins, melamine resins, polyamide resins, polyamide-imide resins, polyetherimide resins and phenoxy resins.

Of the above conductive powders and binders, it is especially preferable to use a graphite powder in combination with a thermosetting resin. Such a combination enables the separator strength and electrical conductivity to be improved. Moreover, during curing of the hydrophilic resin, the hydrophilic resin and the thermosetting resin react with one another, which discourages delamination and the leaching of electrical power generation inhibitors from the separator.

The relative proportions in which the conductive powder and the binder are combined in the above composition are not subject to any particular limitation. For example, these components may be blended in respective amounts of 50 to 95 wt% of conductive powder and 5 to 50 wt% of binder.

A fibrous reinforcement, such as glass fibers, carbon fibers, whiskers or organic fibers (e.g., phenol, vinylon), may be added in an amount of 1 to 20 wt% based on the composition to enhance the strength of the separator.

Moreover, a metal oxide, and specifically activated alumina, titanium oxide or tin oxide, may be added to the shaped body in an amount of 1 to 45 wt% to improve the hydrophilic properties of the shaped body. In such cases, the amount of binder is preferably set at 4 to 20 wt%.

Any technique commonly used for shaping separator substrates may be employed without particular limitation to shape the above composition.

The resulting shaped body may be either of dense or porous construction. If porous, the pore size is preferably from 0.1 to 10 µm, and most preferably from 0.8 to 5 µm.

The metal oxide in the hydrophilic resin used to coat and impregnate the shaped body may be any that is both hydrophilic and stable (that is, not subject to dissolution, exothermic reaction or degradation) in water, including hot water. Illustrative examples include activated alumina, titanium oxide, tin oxide and ruthenium oxide. Of these, the use of one or more selected from among activated alumina, titanium oxide and tin oxide is preferred.

No particular limitation is imposed on the average particle size of these metal oxides, although an average particle size of 0.1 to 500 µm is preferred. An average particle size of 10 to 100 µm is especially preferred for activated alumina, and an average particle size of 0.1 to 10 µm is especially preferred for titanium oxide and tin oxide.

The hydrophilic resin may be any which, when cured, is hydrophilic yet resistant to hot water (i.e., insoluble and non-eroding), and moreover does not undergo high-temperature creep. Illustrative examples include hydrophilic epoxy resins and hydrophilic phenolic resins (e.g., the self-curing resole-type phenolic resins and amine-modified resole-type phenolic resin described in JP-A 2000-251903). As used herein, the term "hydrophilic resin" encompasses also the resin starting materials.

Of the types of resins mentioned above, the use of epoxy compounds having two or more epoxy groups is preferred. The use of polyethylene glycol diglycidyl ether is especially preferred.

The higher the number of ether linkages on the polyethylene glycol diglycidyl ether, the greater the ability of the ether, together with the dispersed metal oxide, to enhance the hydrophilic properties of the separator. The polyethylene glycol diglycidyl ether has an epoxy equivalent of preferably at least 300, and most preferably at least 500. The starting material composition may also have added thereto a monoepoxy compound such as phenyl glycidyl ether and a hydrophilic polymer dispersant.

Specific examples of suitable water-soluble epoxy compounds (starting compounds) and dispersants include Denacol EX 861, Denacol EX 821, Denacol EX 830, Denacol EX 832, Denacol EX 841, Denacol EX 111 (all made by Nagase ChemteX Corporation), and Queenstat NW-E new (made by Kotani Chemical Industry Co., Ltd.).

To suppress a rise in the contact resistance of the separator without detracting from the water solubility-imparting effect of the resin, graphite, carbon black or the like having an average particle size of not more than 10 µm may be added to the hydrophilic resin.

The above-described hydrophilic resin can be coated and impregnated into the shaped body in the form of a resin, or as an aqueous solution or aqueous dispersion of the resin starting materials. The amount of the above-described metal oxide included within the hydrophilic resin solution is not subject to any particular limitation, although an amount of 1 to 20 wt%, and especially 1 to 5 wt%, is preferred.

At less than 1 wt%, a sufficient hydrophilic property-enhancing effect may not be obtained. On the other hand, at more than 20 wt%, the electrical resistance of the separator may increase or the hydrophilic resin coat may have a tendency to peel.

Any suitable method may be selected to coat and impregnate the shaped body with the hydrophilic resin. Examples of suitable methods include dip coating, spray coating and impregnation under normal pressure, reduced pressure or applied pressure. The amount of hydrophilic resin impregnated is preferably about 0.1 to 1 part by weight, based on the weight of the shaped body.

The method for curing the hydrophilic resin after coating and impregnation is also not subject to any particular limitation, although a curing method that involves heating at 80 to 200°C, and especially 160 to 200°C, is preferred.

One way in which the inventive method of producing a fuel cell separator may be carried out is described below.

First, a composition obtained by mixing 50 to 95 wt% of the electrically conductive powder and 5 to 50 wt% of the binder in a predetermined ratio is kneaded to form a compound. The compound is then charged into a separator-forming mold, and molded under heat (150 to 160°C) and pressure (10 to 50 MPa) for 5 to 10 minutes to form a shaped body.

Using a suitable technique such as dip coating, the shaped body is then coated and impregnated with an aqueous solution of the hydrophilic resin starting material (e.g., a water-soluble epoxy compound) which includes also 1 to 20 wt% of a metal oxide, thereby forming a hydrophilic substance layer on the surface of the molded body. The resin-coated and impregnated shaped body is then heated to 160 to 200°C to cure the hydrophilic resin, yielding a fuel cell separator.

The resulting fuel cell separator has excellent and long-lasting hydrophilic properties, in addition to which the level of power generation inhibitors such as metals that leach from the separator is low. These qualities enable it to maintain a stable power generating efficiency over an extended period of time. Moreover, the use of both a metal oxide and a hydrophilic resin enables the hydrophilic properties to be enhanced while holding the amounts in which each of these components are employed to relatively low levels.

The fuel cell separator of the invention has a gas permeability, as measured in accordance with the isotropic method of JIS K7126, which averages from 1.0×10⁻⁷ to 1.0×10⁻¹³ mol/m²·s·Pa or less, preferably from 1.0×10⁻⁷ to 1.0×10⁻¹¹ mol/m²·s·Pa, and most preferably from 1.0×10⁻⁷ to 1.0×10⁻⁹ mol/m²·s·Pa. Too large a gas permeability may result in the leakage of fuel gas within the assembled fuel cell.

The solid polymer fuel cell of the invention is made up of a plurality of stacked unit cells. Each unit cell is composed of a solid polymer membrane, a pair of electrodes disposed on either side of the polymer membrane, and a pair of separators disposed on either side of the pair of electrodes such as to form gas supplying and removing channels. Some or all of the separators within the fuel cell are the above-described fuel cell separators according to the present invention.

Specifically, it is advantageous for at least 50%, preferably 50 to 100%, more preferably 70 to 100%, and most preferably 80 to 100%, of all the separators in the fuel cell to be fuel cell separators according to the invention. If fuel cell separators according to the invention account for too low a proportion of all the separators in the fuel cell, the energy output by the fuel cell tends to decrease with continuous operation over a long period of time, making it difficult to achieve the objects and advantages of the invention. Those separators used in the fuel cell which are not fuel cell separators according to the present invention may be separators of a type commonly employed in fuel cells.

The solid polymer electrolyte membrane may be of a type which is commonly used in solid polymer fuel cells. Illustrative examples include proton-conducting ion-exchange membranes created from fluorocarbon resins, and specifically polytrifluorostyrene sulfonic acids or perfluorocarbonsulfonic acids (Nafion™). The surface of the electrolyte membrane is typically coated with a paste composed of a catalyst-supporting carbon powder dispersed in an organic solvent such as a perfluorocarbonsulfonic acid-containing lower fatty alcohol-water mixed solvent (Nafion 117 solution). The catalyst supported by the carbon powder is generally platinum or an alloy of platinum with another metal.

The pair of electrodes situated on either side of the solid polymer electrolyte membrane may be made of, for example, carbon paper, carbon felt, or carbon cloth woven from carbon fiber yarn.

The electrolyte membrane and electrodes are integrally united by sandwiching the electrolyte membrane between the pair of electrodes and bonding under heat (120 to 130°C) and pressure. Alternatively, the electrolyte membrane and the pair of electrodes may be united by bonding with an adhesive.

The resulting electrode/electrolyte membrane/electrode laminate is then mounted between a pair of separators such as to form flow channels capable of supplying and removing the reactant and product gases, thereby forming a unit cell. Mounting may be carried out by, for example, applying an adhesive to the areas of the separators (i.e., the ribs) which come into contact with the electrodes.

By using the inventive fuel cell separators of the invention as some (preferably at least 50%) or all of the separators in the solid polymer fuel cell of the invention, the fuel cell is able to maintain a stable power generating efficiency over a long period of time, resulting in a high operating efficiency. Such characteristics make this solid polymer fuel cell particularly well suited for use as a mobile power source in such applications as automobiles and small boats.

### EXAMPLES

The following examples and comparative examples are provided to illustrate the invention, and are not intended to limit the scope thereof.

### Example 1

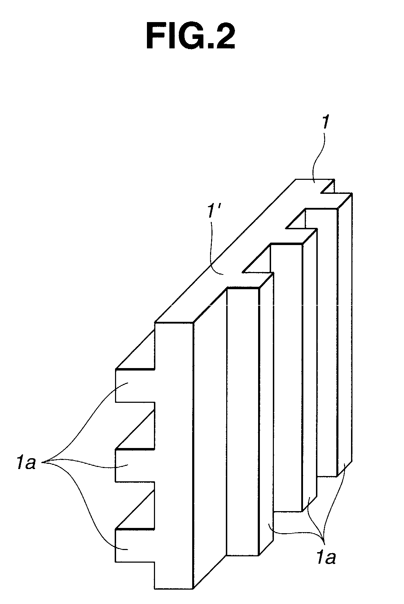

A compound of 90 wt% synthetic graphite powder having an average particle size of 60 µm and 10 wt% phenolic resin was charged into a separator-forming mold and molded under heat (150°C) and pressure (19.6 MPa) for 5 minutes to produce a molded body 1' which is 100 mm long, 100 mm wide and 2.0 mm thick, and which has ribs on both the left and right sides as shown in FIG. 2.

The molded body 1' was coated and impregnated with a metal oxide-containing hydrophilic resin composition. This was done by dipping the molded body 1' in an aqueous dispersion of a hydrophilic resin composition containing the metal oxide (activated alumina) shown in Table 1, reducing the pressure to -0.07 Pa, then taking the molded body 1' out of the dispersion.

Next, the resin coated and impregnated molded body 1' was heat treated at 70°C, thus curing the hydrophilic resin component and forming on the surface of the molded body 1' a hydrophilic substance layer. This completed production of the fuel cell separator 1. The weight of the hydrophilic substance layer thus formed, as calculated by subtracting the weight of the molded body 1' prior to coating and impregnation from the weight of the separator 1 ultimately obtained, was 50 mg.

### Example 2

Aside from using titanium oxide instead of activated alumina, a fuel cell separator 1 was obtained in the same way as in Example 1.

### Example 3

Aside from using tin oxide instead of activated alumina, a fuel cell separator 1 was obtained in the same way as in Example 1.

### Examples 4 to 6

Aside from varying the proportion of activated alumina in the hydrophilic resin starting material composition as shown in Table 1, in each of these examples a fuel cell separator 1 was obtained in the same way as in Example 1.

### Comparative Example 1

Aside from not coating and impregnating the molded body 1' with a metal oxide-containing hydrophilic resin composition, a fuel cell separator 1 was obtained in the same way as in Example 1.

### Comparative Example 2

Aside from using a phenolic resin (PR-50781, made by Sumitomo Bakelite Co., Ltd.) that lacks hydrophilic properties when cured instead of a hydrophilic epoxy resin, a fuel cell separator 1 was obtained in the same way as in Example 1.

### Comparative Example 3

Aside from using a polyvinyl alcohol which has not been formalized and which dissolves in 80°C water instead of a hydrophilic epoxy resin, a fuel cell separator 1 was obtained in the same way as in Example 1.

### Comparative Example 4

Aside from using zeolite instead of activated alumina, a fuel cell separator 1 was obtained in the same way as in Example 1.

### Comparative Example 5

Aside from using silica gel instead of activated alumina, a fuel cell separator 1 was obtained in the same way as in Example 1.

**Table 1**

| | Hydrophilic resin starting material composition (wt%) | | | | | | | | |
|---|---|---|---|---|---|---|---|---|---|
| | Water-soluble epoxy compound | Phenolic resin | Polyvinyl alcohol | Activated alumina | Titanium oxide | Tin oxide | Zeolite | Silica gel | Water |
| Example 1 | 10 | - | - | 2 | - | - | - | - | 88 |
| Example 2 | 10 | - | - | - | 2 | - | - | - | 88 |
| Example 3 | 10 | - | - | - | - | 2 | - | - | 88 |
| Example 4 | 10 | - | - | 4 | - | - | - | - | 86 |
| Example 5 | 10 | - | - | 8 | - | - | - | - | 82 |
| Example 6 | 10 | - | - | 16 | - | - | - | - | 74 |
| Comparative Example 1 | - | - | - | - | - | - | - | - | - |
| Comparative Example 2 | - | 10 | - | 2 | - | - | - | - | 88 |
| Comparative Example 3 | - | - | 10 | 2 | - | - | - | - | 88 |
| Comparative Example 4 | 10 | - | - | - | - | - | 2 | - | 88 |
| Comparative Example 5 | 10 | - | - | - | - | - | - | 2 | 88 |
| Water-soluble epoxy compound: polyethylene glycol diglycidyl ether (Denacol EX-861, made by Nagase ChemteX Corporation) | | | | | | | | | |
| Phenolic resin: Water-soluble resole-type phenolic resin | | | | | | | | | |
| Activated alumina: Average particle size, 100 µm (AC-11, made by Sumitomo Chemical Co., Ltd.) | | | | | | | | | |
| Titanium oxide: Average particle size, 0.25 µm (CR-50, made by Ishihara Sangyo Kaisha, Ltd.) | | | | | | | | | |
| Tin oxide: Average particle size, 3.0 µm (SH, made by Nihon Kagaku Sangyo Co., Ltd.) | | | | | | | | | |
| Zeolite: Average particle size, 200 mesh (A-4, a synthetic zeolite made by Tosoh Corporation) | | | | | | | | | |
| Silica gel: Average particle size, 100 µm (made by Fuji Gel Sangyo K.K.) | | | | | | | | | |

The initial characteristics (specific resistance, surface resistivity, contact resistance and contact angle) and long-term durability (extraction test) were measured for each fuel cell separator obtained in the above examples of the invention and the comparative examples. The results are given below in Table 2.

**Table 2**

| | Resistance values | | | Contact angle (degrees) | Extraction test (µS/cm) |
|---|---|---|---|---|---|
| | Specific resistance (mΩ·cm) | Surface resistivity (mΩ·square) | Contact resistance (mΩ·cm²) | | |
| Example 1 | 8.3 | 40 | 12 | 30 | 39 |
| Example 2 | 8.0 | 40 | 11 | 25 | 30 |
| Example 3 | 8.0 | 40 | 11 | 25 | 28 |
| Example 4 | 8.6 | 50 | 14 | 25 | 42 |
| Example 5 | 10 | 80 | 25 | 20 | 45 |
| Example 6 | 15 | 100 | 50 | 17 | 50 |
| Comparative Example 1 | 7.9 | 15 | 3.8 | 130 | 27 |
| Comparative Example 2 | 9.0 | 1100 | 300 | 100 | 35 |
| Comparative Example 3 | 12 | 2000 | 600 | 30 | 100 |
| Comparative Example 4 | 8.0 | 43 | 12 | 30 | 300 |
| Comparative Example 5 | 8.0 | 50 | 14 | 30 | 300 |

The above characteristics were measured as follows.
1) Specific Resistance:
   Measured by the four-probe method described in JIS H-0602.
2) Surface Resistivity:
   Measured using a Loresta SP Model MCP-T500 made by Mitsubishi Chemical Corporation).
3) Contact Resistance:
   The separator was placed between two smooth gold-plated copper plates, and the contact resistance was measured from the voltage drop across the plates when a fixed current was passed through.
4) Contact Angle:
   A drop of deionized water was deposited on the surface of a flat-lying separator with a pipette, and the contact angle of the water on the separator was measured using a Face contact angle meter, model CA-D, made by Kyowa Interface Science Co., Ltd.
5) Extraction Test:
   A 15 g piece of the separator was cut out, immersed in 400 g of deionized water, and heated at 90°C for 40 days, following which the electrical conductivity of the deionized water was measured.

It is apparent from Table 2 that the fuel cell separators obtained in Examples 1 to 6 according to the invention, each of which was produced by molding a body from a composition of primarily carbon and resin, then coating and impregnating the molded body with a metal oxide-containing water-soluble epoxy resin, generally had a lower surface resistivity and contact resistance, underwent less extraction of substances that inhibit electrical power generation by the fuel cell, and thus were better overall separators than the separators obtained in the comparative examples.

### Example 7

Carbon paper (made by Chemix Co., Ltd.) was used as the pair of electrodes sandwiching the solid polymer electrolyte membrane (Nafion™). The electrolyte membrane and the pair of electrodes were bonded by an ordinary method to form a monolithic electrode. The monolithic electrode was sandwiched between a pair of the fuel cell separators produced in Example 1, giving a unit cell having flow channels for supplying and removing reactant and product gases. A fuel cell was assembled by stacking together 50 of these unit cells, and tightening the stack with bolts and nuts.

The resulting fuel cell was confirmed to be capable of charging and discharging, and to function effectively as a fuel cell.

After being operated continuously for 500 hours, this assembled fuel cell had an output that was more than 90% of the initial output, indicating substantially no change in performance.

As described and demonstrated above and set forth in the claims below, the separator of the present invention has a high degree of hydrophilicity, undergoes little leaching of substances that inhibit electrical power generation by the fuel cell, and can be easily and inexpensively produced.

In particular, when use is made of a hydrophilic resin composition composed of at least one metal oxide selected from among activated alumina, titanium oxide and tin oxide in combination with a hydrophilic epoxy compound, there can be obtained a separator which, in addition to having a high hydrophilicity and undergoing very little leaching of substances that inhibit power generation by the fuel cell, also has low resistance values.

Japanese Patent Application No. 2002-011517 is incorporated herein by reference.

Although some preferred embodiments have been described, many modifications and variations may be made thereto in light of the above teachings. It is therefore to be understood that the invention may be practiced otherwise than as specifically described without departing from the scope of the appended claims.

## Claims

1. A method of producing fuel cell separators, comprising the steps of:
shaping a composition comprising an electrically conductive powder and a binder to form a shaped body,
coating and impregnating the shaped body with a metal oxide-containing hydrophilic resin, and
curing the hydrophilic resin.

2. The method of claim 1, wherein the metal oxide is at least one selected from among activated alumina, titanium oxide and tin oxide.

3. The method of claim 1 or 2, wherein the hydrophilic resin is a hydrophilic epoxy resin.

4. The method of claim 3, wherein the hydrophilic epoxy resin is polyethylene glycol diglycidyl ether.

5. The method of claim 4, wherein the polyethylene glycol diglycidyl ether has an epoxy equivalent of at least 300.

6. A fuel cell separator obtainable by the fuel cell separator production method of any one of claims 1 to 5.

7. A solid polymer electrolyte fuel cell comprising a plurality of stacked unit cells, each unit cell being composed of a solid polymer membrane, a pair of electrodes disposed on either side of the polymer membrane, and a pair of separators disposed on either side of the pair of electrodes such as to form gas supplying and removing channels; wherein at least some of the separators within the fuel cell are fuel cell separators according to claim 6.
